# EUROPÄISCHE PATENTSCHRIFT

(11) **EP 0 423 474 B1**
(45) Veröffentlichungstag und Bekanntmachung des Hinweises auf die Patenterteilung: **10.11.1993**
(21) Anmeldenummer: 90116640.5
(22) Anmeldetag: 30.08.1990
(51) Int. Cl.: F16B 7/04

(54) **Vorrichtung zum lösbaren Verbinden von zwei Profilstäben**
Device for the releasable fastening of two profiled rods
Dispositif pour relier deux baguettes profilées de façon à ce qu'elles soient détachables

(30) Priorität: 20.10.1989 DE 8912469 U
(43) Veröffentlichungstag der Anmeldung: 24.04.1991
(73) Patentinhaber: RK-Rose + Krieger GmbH & Co. Kommanditgesellschaft Verbindungs- und Positioniersysteme, D-32438 Porta Westfalica (DE)
(72) Erfinder: Schunke, Kurt, D-4950 Minden (DE)
(74) Vertreter: Stracke, Alexander, Dipl.-Ing.

(56) Entgegenhaltungen:
- AT-B- 304 050
- DE-B- 1 227 629
- DE-U- 8 604 195
- FR-A- 2 590 943

## Beschreibung

Die vorliegende Erfindung betrifft zwei durch eine Vorrichtung lösbar miteinander verbundene Profilstäbe gemäß dem Oberbegriff des Anspruches 1.

Derartig miteinander verb undene Profilstäbe sind aus der DE-B-12 27 629 bekannt.

Allerdings sind die darin gezeigten und beschriebenen Klemmeinrichtungen nur mit einem erheblichen Fertigungsaufwand herstellbar. Im übrigen sind diese Klemmeinrichtungen nicht geeignet, Profilstäbe stumpf- oder spitzwinklig miteinander zu verbinden, so daß sie lediglich für einen speziellen Anwendungsbereich, nämlich für eine rechtwinklige oder gleichgerichtete Verbindung einsetzbar sind.

Aus der AT-B-340 050 sind gleichfalls durch Klemmeinrichtungen miteinander verbundene Profilstäbe bekannt.
Dabei besteht die jeweilige Klemmeinrichtung aus jeweils einem Glied. Diese sind mit Gewindebohrungen versehen, in die Spannbolzen eingeschraubt sind, die mit ihrem konischen Kopf in Löcher eingreifen und das Glied an die hinterschneidung der Längsnut anpressen.
Um die Klemmeinrichtungen festzulegen, müssen in die Profilstäbe Löcher eingebracht werden, in die die Spannbolzen eingreifen.

Naturgemäß ist dies mit einem erheblichen Fertigungsaufwand verbunden, der insbesondere auch aufgrund der erforderlichen Maßgenauigkeit der Abstände der Löcher die Herstellungs- und Montagekosten so ungünstig beeinflussen, daß ein betriebswirtschaftlich sinnvoller Einsatz der Vorrichtung nicht gegeben ist.

Als weiterer Nachteil dieser Vorrichtung muß angesehen werden, daß deren sicherer Halt in den Profilstäben aufgrund fertigungsbedingter Toleranzen nicht unbedingt gewährleistet ist, da beim Einbringen der Löcher durchaus Ungenauigkeiten, insbesondere im Abstand der Löcher zueinander, auftreten können, die dazu führen, daß lediglich ein Spannbolzen mit einem Konus exakt an der Wandung des Loches anliegt.

Dadurch, daß die Glieder dieser bekannten Vorrichtung innerhalb der Längsnut liegen und dort miteinander verbunden sind, ist ein Einbringen in die entsprechende Längsnut des zugeordneten Profilstabes so möglich, daß die miteinander verbundenen Glieder von der Stirnseite des Profilstabes her in die Längsnut eingeführt werden.
Dazu muß jedoch in jedem Fall die Stirnseite des Profilstabes frei zugänglich sein. Ein Auswechseln der Vorrichtung, beispielsweise dann, wenn eines der Glieder beschädigt ist, aus einem fertig montierten Regal o.dgl. ist praktisch nur möglich, wenn dieses Regal weitgehend zerlegt wird.

Dieser recht gravierende Nachteil trifft auch auf die aus der gattungsbildenden DE-B-12 27 629 bekannten Vorrichtungen zu.

Die geschilderten Nachteile der bekannten Klemmeinrichtungen stellen sich insofern als besonders gravierend dar, da solche Vorrichtungen beim Bau von Regalen, Messeständen o.dgl. in einer Vielzahl eingesetzt werden.

Der vorliegenden Erfindung liegt daher die Aufgabe zugrunde, die die Profilstäbe miteinander verbindende Vorrichtung so zu gestalten, daß eine kostengünstige Herstellung und Montage, eine erhöhte Belastbarkeit sowie eine universelle Einsetzbarkeit möglich wird.

Diese Aufgabe wird erfindungsgemäß im kennzeichnenden Teil des Anspruches 1 genannten Merkmale gelöst.

Durch die gelenkige Verbindung der Klemmplatten beider Klemmeinrichtungen besteht die Möglichkeit, beide Profilstäbe in jeder beliebigen Winkelstellung zueinander miteinander zu verbinden.
Überdies erlaubt die Erfindung eine wesentlich kostengünstigere Herstellung der Klemmeinrichtungen als bisher, da diese mit geringem Fertigungsaufwand herstellbar ist.

Des weiteren kann die Festlegung der Klemmeinrichtungen in den Profilstäben ohne deren vorherige Bearbeitung erfolgen. Auch hieraus ergeben sich naturgemäß erhebliche wirtschaftliche Vorteile.

Ferner können jetzt die Klemmkräfte vollflächig an dem jeweiligen Profilstab angreifen, so daß ein wesentlich sicherer Halt entsteht, der zu einer erhöhten Belastungsfähigkeit der Klemmeinrichtung führt.

Außerdem kann die erfindungsgemäße Vorrichtung in die Längsnuten der Profilstäbe eingeführt werden, wenn diese bereits in ihrer Endstellung zueinanderstehen. Auch ein Auswechseln der Vorrichtung oder ein Einbringen einer weiteren Vorrichtung, um ggf. die Belastungsfähigkeit der Verbindung zu verstärken, ist möglich, ohne irgendwelche Bauteile, wie Nutsteine oder Klemmplatten, von der Stirnseite des Profilstabes her in die Längsnuten einzuschieben. Dabei wird der Nutstein durch Verkanten in die hinterschnittene Längsnut eingelegt und durch anschließendes Verdrehen in eine Lage gebracht, in der er die Längsnut hintergreift. Die beiden miteinander verbundenen Klemmplatten können sodann mit den Nutsteinen verschraubt werden, wobei sich die Klemmplatten an der Außenseite des jeweiligen Profilstabes abstützen.

Vorteilhafte Ausgestaltungen der Erfindung sind in den Unteransprüchen gekennzeichnet.

Ausführungsbeispiele der Neuerung werden nachfolgend anhand beigefügter Zeichnungen beschrieben.

Es zeigen:
- Fig. 1+ 2: den Einsatz von neuerungsgemäß ausgebildeten Vorrichtungen bei in unterschiedlichen Positionen miteinander verbundenen Profilstäben in jeweils perspektivischer Darstellung,
- Fig. 3: zwei durch die Vorrichtungen verbundene Profilstäbe entsprechend der Figur 2 in einer Seitenansicht, die teilweise geschnitten ist,
- Fig. 4: einen Querschnitt durch einen Profilstab gemäß der Linie IV-IV in Figur 3,
- Fig. 5+ 6: die schaubildliche Darstellung von verschiedenen Ausführungsbeispielen der Vorrichtung nach der Neuerung.

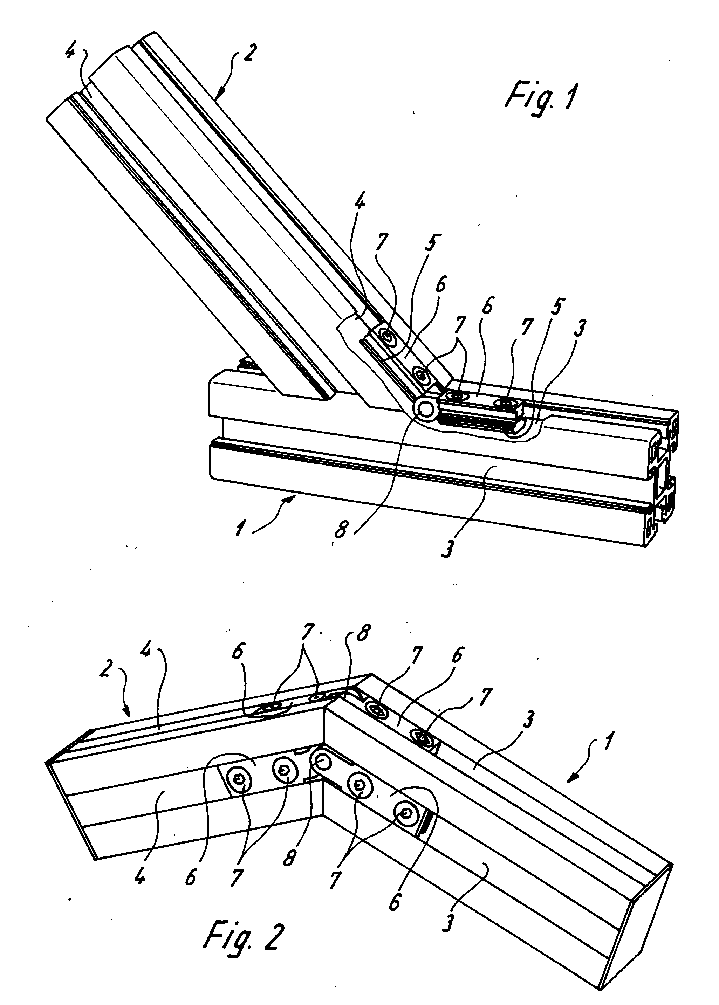

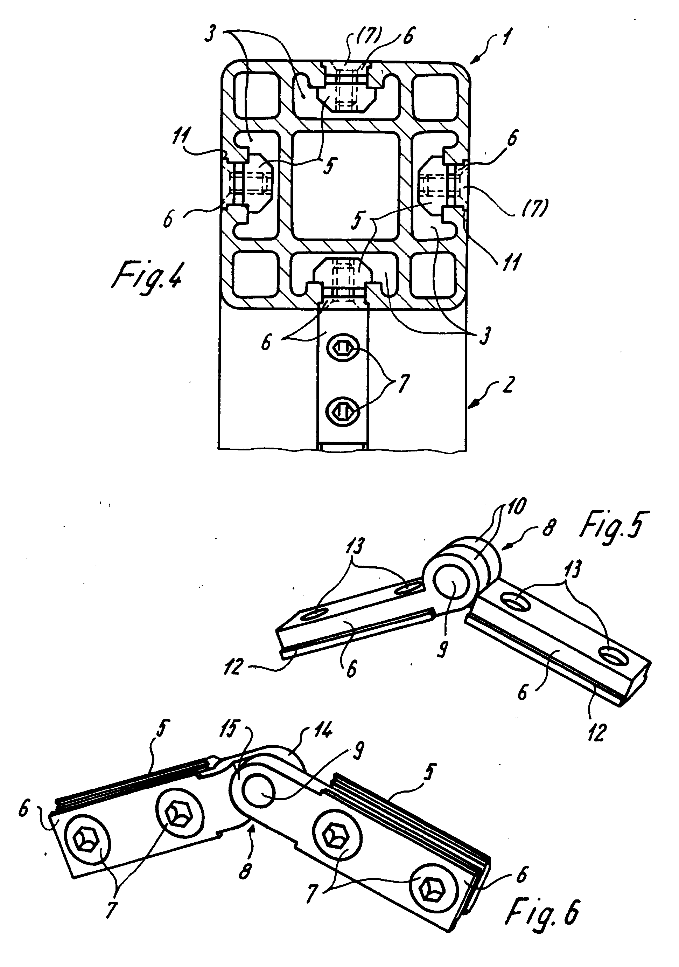

In den Figuren 1 bis 4 sind jeweils zwei Profilstäbe 1, 2 dargestellt, die miteinander durch eine Vorrichtung lösbar verbunden sind. Jeder Profilstab 1, 2 weist mindestens eine, sich in Längsrichtung erstreckende Längsnut 3, 4 auf, die, wie die Figur 4 sehr deutlich zeigt, hinterschnitten ist.

Während bei dem in der Figur 1 dargestellten Ausführungsbeispiel der zweite Profilstab 2 mit seiner Stirnfläche auf einer Längsseite des ersten Profilstabes 1 aufliegt, und dabei außerhalb eines rechten Winkels zum ersten Profilstab 1 verläuft, liegen die Profilstäbe 1, 2 des in den Figuren 2 bis 4 dargestellten Ausführungsbeispieles stirnseitig aneinander ,wobei sie stumpfwinklig zueinander stehen.

Jede der Vorrichtungen, mit denen die Profilstäbe 1, 2 miteinander verbunden sind, besteht aus zwei Nutsteinen 5, die in Längsnuten 3, 4 der zwei aneinanderliegenden Profilstäbe 1, 2 festgeklemmt sind.

Wie aus der Figur 4 zu erkennen ist, hintergreifen dabei die Nutsteine 5 die zugeordnete, hinterschnittene Nut 3.

Zum Festklemmen jedes Nutsteines 5 ist eine Klemmplatte 6 vorgesehen, die mit dem Nutstein 5 durch Schrauben verbunden ist und sich an der Außenseite des Profilstabes 1, 2 abstützt.

Besonders vorteilhaft ist es, wenn die Außenseite der Längsnut 3 seitliche, in Längsachsrichtung verlaufende Ausklinkungen 11, aufweist in denen gleichfalls seitlich angeformte Kragen 12 der Klemmplatte 6 einliegen, so daß ein flächenbündiger Abschluß zwischen der Außenseite des Profilstabes 1, 2 und der Klemmplatte 6 möglich ist.

Im Übergangsbereich von einem Profilstab 1 zum anderen Profilstab 2 sind die Klemmplatten 6 gelenkig miteinander verbunden, so daß im Prinzip die Befestigung der Profilstäbe 1, 2 unter jedem Winkel erfolgen kann.

Bei dem in der Figur 1 gezeigten Ausführungsbeispiel ist es zweckmäßig, um eine wirklich feste Verbindung zwischen den Profilstäben 1,2 herstellen zu können, jeweils eine Vorrichtung in den sich gegenüberliegenden Längsnuten 4 des zweiten Profilstabes 2 einerseits und in der zugeordneten gleichgerichteten Längsnut 3 des ersten Profilstabes 1 andererseits anzuordnen.

Dabei kommt eine Vorrichtung zum Einsatz, deren Klemmplatten 6 in einer Art miteinander gelenkig verbunden sind, wie sie in der Figur 5 dargestellt ist.

Dort wird die Gelenkverbindung gebildet aus jeweils einem an jeder Klemmplatte 6 angeordneten Auge und einem durch die Augen 10 geführten Gelenkbolzen, der quer zu den Bohrungen verläuft, durch die die Schrauben 7 gesteckt werden.
So besteht die Möglichkeit, die parallel zur zugeordneten Außenfläche des jeweiligen Profilstabes 1, 2 verlaufende Außenseite im Winkel zur Außenseite der anderen Klemmplatte 6 zu verändern.

Eine weitere Ausbildung des Gelenkes 8 bzw. der Verschwenkbarkeit der Klemmplatten 6 zueinander ist in der Figur 6 gezeigt.

Dabei verläuft der Gelenkbolzen 9 parallel zur Längsachse der Schrauben 7, wobei sinnvoller Weise ein Auge 14 gegenüber dem anderen Auge 15 abgekröpft ist, so daß ein insgesamt flächenbündiger Übergang zwischen den beiden miteinander verbundenen Klemmplatten erzielt wird.

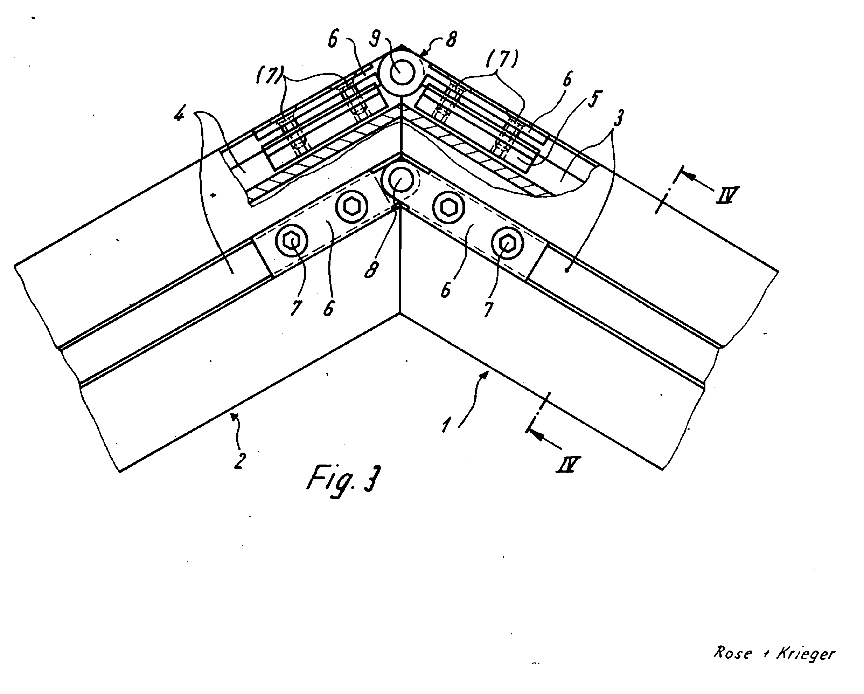

Diese Ausführungsform der Vorrichtung kann vorteilhafter Weise dann zum Einsatz kommen, wenn eine Verbindung zwischen zwei Profilstäben geschaffen werden soll, wie sie in der Figur 2 bzw. 3 dargestellt ist.

Dabei werden die einander zugeordneten Nutsteine 5 und Klemmplatten 6 in den Längsnuten 3, 4 plaziert, die in gleicher Ebene verlaufen.
Für einen festen Verbund ist es vorteilhaft, die Vorrichtung auf zwei sich gegenüberliegenden Seiten anzuordnen.

Denkbar ist aber auch, daß eine Vorrichtung zum Einsatz kommt, wie sie in der Figur 5 angedeutet ist. Diese Art der Verbindung ist in der Figur 3 in dem Teilschnitt gezeigt.

### Bezugszeichenliste

- 1: Profilstab
- 2: Profilstab
- 3: Längsnut
- 4: Längsnut
- 5: Nutstein
- 6: Klemmplatte
- 7: Schraube
- 8: Gelenk
- 9: Gelenkbolzen
- 10: Auge
- 11: Ausklinkung
- 12: Kragen
- 13: Bohrung
- 14: Auge
- 15: Auge

## Patentansprüche

1. Zwei durch eine Vorrichtung lösbar miteinander verbundene Profilstäbe (1,2), die jeweils mindestens eine, in Längsachsrichtung verlaufende hinterschnittene Längsnut (3,4) aufweisen, wobei die Vorrichtung aus zwei miteinander verbundenen, jeweils in einer Längsnut (3,4) eines Profilstabes (1,2) festgelegten Klemmeinrichtungen besteht, die jeweils aus einem in der entsprechenden Längsnut (3,4) angeordneten und diese hintergreifenden Nutstein (5) und einer mit dem Nutstein (5) durch Schrauben (7) verbundenen, an der zugeordneten Außenseite des jeweiligen Profilstabes (1,2) sich abstützenden Klemmplatte (6) besteht, **dadurch gekennzeichnet**, daß die Klemmplatten (6) beider Klemmeinrichtungen gelenkig miteinander verbunden sind.

2. Profilstäbe nach Anspruch 1, dadurch gekennzeichnet, daß das die beiden Klemmplatten (6) miteinander verbindende Gelenk (8) aus zwei Augen (10, 14, 15), von denen jeweils eines an einer Klemmplatte (6) festgelegt ist, und einem die Augen (10, 14, 15) durchtretenden Gelenkbolzen besteht.

3. Profilstäbe nach Anspruch 2, dadurch gekennzeichnet, daß der Gelenkbolzen (9) parallel zu den Schrauben (7) verläuft.

4. Profilstäbe nach Anspruch 2, dadurch gekennzeichnet, daß der Gelenkbolzen (9) quer zu den Schrauben (7) verläuft.

5. Profilstäbe nach Anspruch 1, bei denen die Längsnuten mit in Längsrichtung verlaufenden, seitlichen Ausklinkungen (11) versehen sind, dadurch gekennzeichnet, daß jede Klemmplatte (6) einen Kragen (12) aufweist, der in den Ausklinkungen (11) einliegt.

6. Profilstäbe nach Anspruch 1 oder 5, dadurch gekennzeichnet, daß jede Klemmplatte (6) flächenbündig mit der zugeordneten Außenseite des Profilstabes (1, 2) verläuft.

## Claims

1. Two shaped bars (1, 2) which are releasably connected together by an arrangement and which each have at least one longitudinal groove (3, 4) of undercut configuration, which extends in the direction of the longitudinal axis, wherein the arrangement comprises two clamping devices which are connected together and which are each fixed in a respective longitudinal groove (3, 4) of a shaped bar (1, 2) and which each comprises a groove-engaging block (5) arranged in the corresponding longitudinal groove (3, 4) and engaging behind sane, and a clamping plate (6) which is connected to the groove-engaging block (5) by screws (7) and which bears against the associated outside of the respective shaped bar (1, 2), characterised in that the clamping plates (6) of both clamping devices are hingedly connected together.

2. Shaped bars according to claim 1 characterised in that the hinge (8) connecting the two clamping plates (6) together comprises two eyes (10, 14, 15), each of which is fixed to a respective clamping plate (6), and a hinge pin which passes through the eyes (10, 14, 15).

3. Shaped bars according to claim 2 characterised in that the hinge pin (9) extends parallel to the screws (7).

4. Shaped bars according to claim 2 characterised in that the hinge pin (9) extends transversely to the screws (7).

5. Shaped bars according to claim 1 wherein the longitudinal grooves are provided with lateral recesses (11) extending in the longitudinal direction, characterised in that each clamping plate (6) has a collar (12) which fits in the recesses (11).

6. Shaped bars according to claim 1 or claim 5 characterised in that each clamping plate (6) extends flush with the associated outside of the shaped bar (1, 2).

## Revendications

1. Deux barres profilées (1, 2) reliées de façon amovible au moyen d'un dispositif, présentant respectivement au moins une rainure longitudinale (3, 4) en contre-dépouille s'étendant en direction de l'axe longitudinal, le dispositif étant constitué de deux moyens de blocage liés l'un à l'autre, fixés respectivement dans une rainure longitudinale (3, 4) d'une barre profilée (1, 2), moyens qui comprennent respectivement une noix (5), logée dans la rainure longitudinale (3, 4) correspondante et la saisissant par derrière, et une plaquette de blocage (6), liée à la noix (5) par des vis (7) et s'appuyant sur le côté extérieur correspondant de la barre profilée (1, 2) respective, caractérisées en ce que les plaquettes de blocage (6) des deux dispositifs de blocage sont liées de façon articulée.

2. Barres profilées selon la revendication 1, caractérisées en ce que l'articulation (8) reliant les deux plaquettes de blocage (6) est constituée de deux yeux (10, 14, 15), dont respectivement un est fixé sur une plaquette de blocage (6), et d'un axe d'articulation traversant les yeux (10, 14, 15).

3. Barres profilées selon la revendication 2, caractérisées en ce que l'axe d'articulation (9) est parallèle aux vis (7).

4. Barres profilées selon la revendication 2, caractérisées en ce que l'axe d'articulation (9) s'étend perpendiculairement aux vis (7).

5. Barres profilées selon la revendication 1, dans lesquelles les rainures longitudinales sont pourvues de parties en retrait (11) latérales s'étendant dans le sens de la longueur, caractérisées en ce que chaque plaquette de blocage (6) présente une collerette (12) qui repose dans les parties en retrait (11).

6. Barres profilées selon la revendication 1 ou 5, caractérisées en ce que chaque plaquette de blocage (6) se trouve au même niveau que le côté extérieur associé de la barre profilée (1, 2).
